# EUROPÄISCHE PATENTANMELDUNG

(11) **EP 4 834 681 A1**
(43) Veröffentlichungstag der Anmeldung: **04.11.2026**
(21) Anmeldenummer: 26162273.2
(22) Anmeldetag: 04.03.2026
(51) Int. Cl.: B60T 8/18, B60T 8/88, B60T 13/66, B60T 17/22

(54) **SCHIENENFAHRZEUG UND VERFAHREN ZU DESSEN BETRIEB**

(30) Priorität: 30.04.2025 DE 102025116639
(71) Anmelder: Siemens Mobility GmbH, 80997 München (DE)
(72) Erfinder: Karipidis, Claus-Ulrich, 91058 Erlangen (DE); Kilian, Lennart, 80997 München (DE); Lichterfeld, Jens Peter, 91058 Erlangen (DE); Pfister, Maximilian, 91058 Erlangen (DE); Steinert, Maria, 91058 Erlangen (DE)
(74) Vertreter: Siemens Patent Attorneys

(57) **Zusammenfassung**

Die Erfindung bezieht sich unter anderem auf ein Schienenfahrzeug (10) mit zumindest zwei Bremseinheiten (21-24) und mit jeweils einer zugeordneten Abschalteinheit (30) für jede der zumindest zwei Bremseinheiten (21-24). Erfindungsgemäß ist vorgesehen, dass jede Abschalteinheit (30) in einem Passivzustand einen Bremsbetrieb der jeweils zugeordneten Bremseinheit (21-24) erlaubt und in einem Aktivzustand einen Bremsbetrieb der jeweils zugeordneten Bremseinheit (21-24) unterbindet, das Umschalten der Abschalteinheit (30) vom Passivzustand in den Aktivzustand Abschaltenergie (E) erfordert und eine Zentraleinrichtung (40) des Schienenfahrzeugs (10) mit jeder der Abschalteinheiten (30) über eine abschalteinheitsindividuelle Energieversorgungsleitung (51-54) zur Übertragung der Abschaltenergie (E) verbunden ist.

## Beschreibung

Die Erfindung bezieht sich auf ein Schienenfahrzeug, das mit zumindest zwei Bremseinheiten und mit jeweils einer zugeordneten Abschalteinheit für jede der zumindest zwei Bremseinheiten ausgestattet ist.

Bei Schienenfahrzeugen kann bekanntermaßen ein Abschalten von Bremseinheiten erfolgen, wenn ein Fehlverhalten der betroffenen Bremseinheiten festgestellt wird. Ein solches Fehlverhalten kann beispielsweise in einer Bremsblockade bestehen, bei der die jeweils betroffene Bremseinheit die ihr zugeordneten Räder blockiert, obwohl kein Bremsbefehl oder kein einer Blockade entsprechender Bremsbefehl vorliegt. Bei heutzutage im Eisenbahnbereich im Einsatz befindlichen Schienenfahrzeugen erfolgt das Abschalten der Bremseinheiten manuell durch Bedienpersonal, das entsprechende Stellbefehle für die jeweiligen Abschalteinheiten erzeugt.

Der Erfindung liegt die Aufgabe zugrunde, ein Schienenfahrzeug anzugeben, das eine effiziente, aber dennoch sichere Außerbetriebnahme von Bremseinheiten ermöglicht.

Diese Aufgabe wird erfindungsgemäß durch ein Schienenfahrzeug mit den Merkmalen gemäß Patentanspruch 1 gelöst. Vorteilhafte Ausgestaltungen des erfindungsgemäßen Schienenfahrzeugs sind in Unteransprüchen angegeben.

Danach ist erfindungsgemäß vorgesehen, dass jede Abschalteinheit in einem Passivzustand einen Bremsbetrieb der jeweils zugeordneten Bremseinheit erlaubt und in einem Aktivzustand einen Bremsbetrieb der jeweils zugeordneten Bremseinheit unterbindet, das Umschalten der Abschalteinheit vom Passivzustand in den Aktivzustand Abschaltenergie erfordert und eine Zentraleinrichtung des Schienenfahrzeugs mit jeder der Abschalteinheiten über eine abschalteinheitsindividuelle Energieversorgungsleitung zur Übertragung der Abschaltenergie verbunden ist.

Ein wesentlicher Vorteil des erfindungsgemäßen Schienenfahrzeugs ist darin zu sehen, dass bei diesem eine Deaktivierung von Bremseinheiten durch die Zentraleinheit erfolgen kann, so dass das Risiko einer Fehlbedienung im Rahmen einer manuellen Deaktivierung seitens Bedienpersonals entfällt. Da das Ansteuern der Abschalteinheiten dabei über die erfindungsgemäß vorgesehenen abschalteinheitsindividuellen Energieversorgungsleitungen und nicht über einen zentralen Datenbus oder dergleichen erfolgt, lässt sich ein gewünschtes Sicherheitsniveau allein durch eine entsprechende Ausgestaltung der Zentraleinrichtung erreichen bzw. ein fehlerhaftes Deaktivieren von Bremseinheiten allein durch eine entsprechend sichere Ausgestaltung der Zentraleinrichtung vermeiden.

Vorteilhaft ist es, wenn die Zentraleinrichtung zwei oder mehr der Abschalteinheiten über deren abschalteinheitsindividuellen Energieversorgungsleitungen gleichzeitig mit Abschaltenergie versorgen kann.

Besonders vorteilhaft ist es, wenn die Zentraleinrichtung zwei oder mehr der Abschalteinheiten über deren abschalteinheitsindividuellen Energieversorgungsleitungen in beliebiger Kombination gleichzeitig mit Abschaltenergie versorgen kann. Mit anderen Worten kann die Zentraleinrichtung vorzugsweise beispielsweise eine Anschaltgruppe, die zwei oder mehr der Abschalteinheiten umfasst, über die abschalteinheitsindividuellen Energieversorgungsleitungen der Abschalteinheiten der Anschaltgruppe gleichzeitig mit Abschaltenergie versorgen und eine Ausschaltgruppe, die eine oder mehr der anderen Abschalteinheiten umfasst, ausgeschaltet bzw. unversorgt lassen.

Vorteilhaft ist, wenn alle Abschalteinheiten über deren abschalteinheitsindividuelle Energieversorgungsleitungen gleichzeitig mit Abschaltenergie versorgbar sind. Eine solche Ausgestaltung ermöglicht es der Zentraleinrichtung, das Ausschalten der Bremseinheiten je nach der Betriebslage beliebig zu wählen, wobei die Zentraleinrichtung vorzugsweise sicherstellt, dass ein vorgegebenes minimales Bremsvermögen stets gewährleistet bleibt.

Die Zentraleinrichtung ist vorzugsweise dazu ausgestaltet, auf eine mindestens eine der Bremseinheiten betreffende Abschaltanfrage hin zu prüfen, ob ein Abschalten zulässig ist, und im Falle einer Zulässigkeit die von der Abschaltanfrage betroffenen Abschalteinheiten abschalteinheitsindividuell mit Abschaltenergie zu versorgen und in den Aktivzustand zu versetzen und die nicht von der Abschaltanfrage betroffenen Abschalteinheiten hinsichtlich ihrer Versorgung mit Abschaltenergie unverändert zu lassen.

Der Zentraleinrichtung ist vorzugsweise eine Bremsvermögensmarge vorgegeben, die ein maximal abschaltbares Bremsvermögen definiert.

Die Zentraleinrichtung steuert das Abschalten vorzugsweise derart, dass das abgeschaltete Bremsvermögen die Bremsvermögensmarge zu keinem Zeitpunkt überschreitet.

Die Bremsvermögensmarge wird bei einer bevorzugten Ausgestaltung vorzugsweise vor Fahrtbeginn eingestellt.

Alternativ oder zusätzlich kann in vorteilhafter Weise vorgesehen sein, dass die Zentraleinrichtung die Bremsvermögensmarge unter Einbezug des Bremsvermögens aller betriebsbereiten Bremsen des Schienenfahrzeugs und des Fahrzeuggesamtgewichts selbst berechnet.

Die Zentraleinrichtung kann lokal in einem Wagen des Schienenfahrzeugs lokalisiert sein.

Alternativ kann vorgesehen sein, dass die Zentraleinrichtung zwei oder mehr Hilfseinrichtungen umfasst, die im Fahrzeug verteilt sind, beispielsweise auf mehrere Wagen eines mehrgliederigen Fahrzeugs bzw. Wagenverbunds verteilt sind, und miteinander kommunizieren.

Jeder Hilfseinrichtung sind vorzugsweise jeweils individuell ein oder mehr der Bremseinheiten zugeordnet.

Das Bereitstellen der Abschaltenergie wird im Falle eines Abschaltens von Bremseinheiten vorzugsweise von der jeweils zugeordneten Hilfseinrichtung individuell gesteuert.

Das Schienenfahrzeug kann mehrgliedrig sein und/oder durch einen Fahrzeugverband gebildet sein.

Das Aufrechterhalten des Aktivzustands der Abschalteinheit erfordert vorzugsweise das Anliegen einer Strom- und/oder Spannungsversorgung.

Zumindest eine der Abschalteinheiten umfasst vorzugsweise eine Selbsterhaltungsschaltung, die nach einer initialen Versorgung ihrer zugeordneten Abschalteinheit mit Abschaltenergie den Aktivzustand durch das Anlegen der Strom- und/oder Spannungsversorgung auch ohne Mitwirkung der Zentraleinrichtung aufrechterhält.

Mindestens eine der Bremseinheiten umfasst vorzugsweise zwei oder mehr Bremsaktuatoren. Alle Bremsaktuatoren einer jeden Bremseinheit werden vorzugsweise jeweils von der der Bremseinheit zugeordneten Abschalteinheit gemeinsam abgeschaltet.

Die Erfindung bezieht sich außerdem auf ein Verfahren zum Betreiben eines Schienenfahrzeugs, das mit zumindest zwei Bremseinheiten und mit jeweils einer zugeordneten Abschalteinheit für jede der zumindest zwei Bremseinheiten ausgestattet ist. Erfindungsgemäß ist vorgesehen, dass jede Abschalteinheit jeweils in einem Passivzustand einen Bremsbetrieb der jeweils zugeordneten Bremseinheit erlaubt und in einem Aktivzustand einen Bremsbetrieb der jeweils zugeordneten Bremseinheit unterbindet, das Umschalten der Abschalteinheit vom Passivzustand in den Aktivzustand Abschaltenergie erfordert und eine fahrzeugseitige Zentraleinrichtung Bremseinheiten deaktiviert, indem sie die jeweils zugeordneten Abschalteinheiten über abschalteinheitsindividuelle Energieversorgungsleitungen mit der Abschaltenergie versorgt.

Bezüglich der Vorteile des erfindungsgemäßen Verfahrens und dessen vorteilhafter Ausgestaltungen sei auf die obigen Ausführungen im Zusammenhang mit dem erfindungsgemäßen Schienenfahrzeug und dessen vorteilhafter Ausgestaltungen verwiesen.

Vorteilhaft ist es, wenn die Zentraleinrichtung ein maximal abschaltbares Bremsvermögen berücksichtigt und das Aktivieren der Abschalteinheiten so begrenzt, dass die Bremsvermögensmarge nicht überschritten wird.

Die Erfindung wird nachfolgend anhand von Ausführungsbeispielen näher erläutert; dabei zeigen beispielhaft:
- Figur 1: Bestandteile eines Ausführungsbeispiels für ein erfindungsgemäßes Schienenfahrzeug in einer vereinfachten Darstellung von der Seite,
- Figur 2: ein Ausführungsbeispiel für eine Zentraleinrichtung, die bei dem Schienenfahrzeug gemäß Figur 1 eingesetzt werden kann,
- Figur 3: Bestandteile eines zweiten Ausführungsbeispiels für ein erfindungsgemäßes Schienenfahrzeug in einer vereinfachten Darstellung von der Seite,
- Figur 4: ein Ausführungsbeispiel für eine Hilfseinrichtung, die bei der Zentraleinrichtung des Schienenfahrzeugs gemäß Figur 3 eingesetzt werden kann, und
- Figur 5: ein Ausführungsbeispiel für eine Abschalteinheit, die bei den Schienenfahrzeugen gemäß Figur 1 und 3 eingesetzt werden kann.

In den Figuren werden der Übersicht halber für identische oder vergleichbare Komponenten stets dieselben Bezugszeichen verwendet.

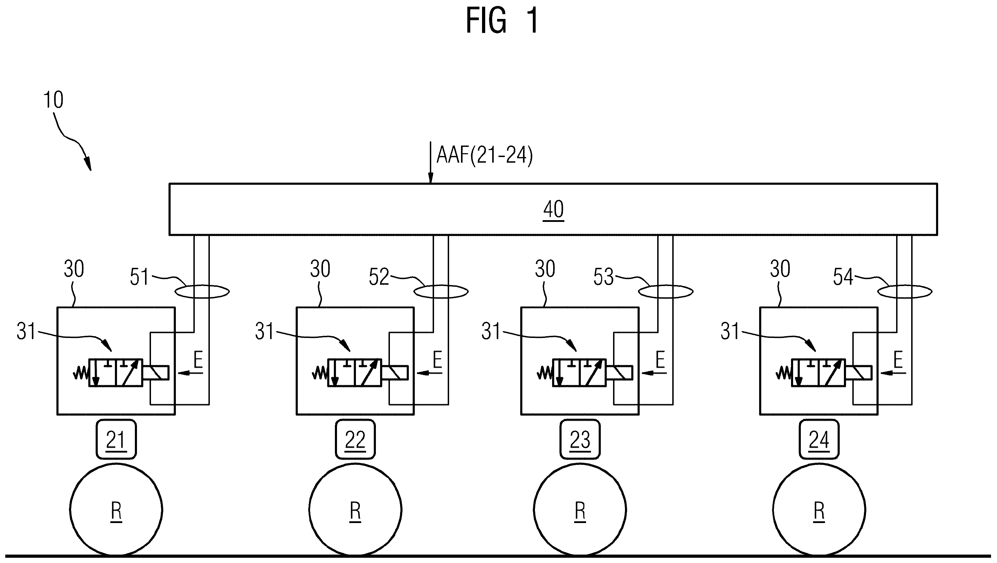

Die Figur 1 zeigt Bestandteile eines Ausführungsbeispiels für ein erfindungsgemäßes Schienenfahrzeug 10 in einer vereinfachten Darstellung von der Seite. Dargestellt sind vier Bremseinheiten 21-24, die zum Bremsen von Rädern R dienen und denen jeweils eine Abschalteinheit 30 zugeordnet ist. Das Schienenfahrzeug 10 gemäß Figur 1 kann mehrgliedrig sein und durch einen Fahrzeugverband gebildet sein.

Die Abschalteinheiten 30 erlauben jeweils in ihrem Passivzustand einen Bremsbetrieb der ihr zugeordneten Bremseinheit; in ihrem Aktivzustand unterbinden sie jeweils den Bremsbetrieb der ihr zugeordneten Bremseinheit. Zum Umschalten vom Passivzustand in den Aktivzustand und Halten des Aktivzustands benötigen die Abschalteinheiten 30 jeweils Abschaltenergie E, die vorzugsweise in elektrischer Form zugefügt wird.

Das Schienenfahrzeug 10 ist außerdem mit einer Zentraleinrichtung 40 ausgestattet, die mit jeder der Abschalteinheiten 30 über eine abschalteinheitsindividuelle Energieversorgungsleitung 51-54 verbunden ist. Die abschalteinheitsindividuellen Energieversorgungsleitungen 51-54 dienen jeweils zur Übertragung der Abschaltenergie E, die eine zu aktivierende bzw. in den Aktivzustand zu versetzende Abschalteinheit 30 benötigt.

Da die Zentraleinrichtung 40 mit jeder der Abschalteinheiten 30 individuell über eine abschalteinheitsindividuelle Energieversorgungsleitung 51-54 verbunden ist, kann sie zwei oder mehr Abschalteinheiten 30 in beliebiger Kombination gleichzeitig mit Abschaltenergie E versorgen. Aufgrund der individuellen Ansteuerbarkeit der Abschalteinheiten 30 könnte die Zentraleinheit 40 rein theoretisch alle Abschalteinheiten 30 über deren abschalteinheitsindividuellen Energieversorgungsleitungen 51-54 gleichzeitig mit Abschaltenergie E versorgen, jedoch wäre dies wegen des damit einhergehenden Totalverlusts an Bremsvermögen nicht sinnvoll und sollte unter allen Umständen durch eine interne Verriegelung, die software- und/oder hardwaremäßig realisiert sein kann, innerhalb der Zentraleinrichtung 40 vermieden werden, es sei denn, das Fahrzeug soll absichtlich ungebremst bewegt werden (z. B. im Rangier- oder Abschleppbetrieb).

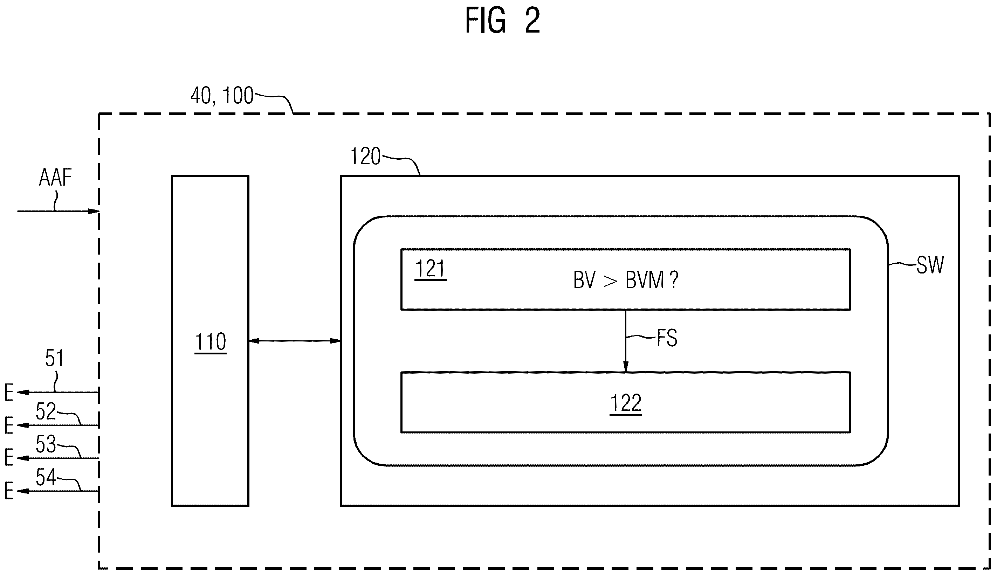

Die Figur 2 zeigt ein Ausführungsbeispiel für eine Zentraleinrichtung 40, die bei dem Schienenfahrzeug 10 gemäß Figur 1 eingesetzt werden kann. Die Zentraleinrichtung 40 umfasst eine Rechenanlage 100, die eine Recheneinrichtung 110 und einen Speicher 120 aufweist. In dem Speicher 120 ist Software SW abgespeichert, die ein Verriegelungsmodul 121 und ein Abschaltsteuermodul 122 umfasst.

Das Verriegelungsmodul 121 enthält Programmbefehle, die bei Ausführung durch die Recheneinrichtung 110 diese veranlassen, in Reaktion auf jede Abschaltanfrage AAF, die ein Abschalten einer der Bremseinheiten 21-24 betrifft, zu prüfen, ob ein solches Abschalten zulässig ist. Im Falle einer Zulässigkeit gibt das Verriegelungsmodul 121 ein Abschalten der betroffenen Bremseinheit frei, indem es dem Abschaltsteuermodul 122 ein entsprechendes Freigabesignal FS übermittelt.

Das Abschaltsteuermodul 122 enthält Programmbefehle, die bei Ausführung durch die Recheneinrichtung 110 diese veranlassen, bei Erhalt eines solchen Freigabesignals FS die von der Abschaltanfrage AAF betroffene Abschalteinheit 30 abschalteinheitsindividuell mit Abschaltenergie E zu versorgen, so dass die betroffene Abschalteinheit 30 in den Aktivzustand versetzt wird. Bezüglich der nicht von der Abschaltanfrage AAF betroffenen Abschalteinheiten 30 ändert sich dadurch nichts, sie bleiben hinsichtlich ihrer Versorgung mit Abschaltenergie E unverändert.

Bei dem Ausführungsbeispiel gemäß Figur 2 wird eine Verriegelung dergestalt, dass ein Abschalten von Bremseinheiten 21-24 nur in einem vorgegebenen Maße möglich ist, softwareseitig im softwarebasierten Verriegelungsmodul 121 gewährleistet.

Um dem Verriegelungsmodul 121 eine Prüfung der Abschaltanfragen AAF zu ermöglichen, ist diesem vorzugsweise eine Bremsvermögensmarge BVM vorgegeben, die ein maximal abschaltbares Bremsvermögen definiert. Das Verriegelungsmodul 121 erzeugt das Freigabesignal FS in Abhängigkeit von dieser Bremsvermögensmarge BVM und stellt sicher, dass das abgeschaltete oder ausgefallene Bremsvermögen BV die Bremsvermögensmarge BVM zu keinem Zeitpunkt überschreitet. Beispielsweise kann das Verriegelungsmodul 121 auf jede Abschaltanfrage AAF hin ein Freigabesignal FS erzeugen, sofern das Abschalten der betroffenen Bremseinheit oder Bremseinheiten 21-24 lediglich zu einem Bremsvermögensverlust ohne Überschreiten der Bremsvermögensmarge BVM führt; andernfalls, also bei Überschreiten der Bremsvermögensmarge BVM würde die Erzeugung des Freigabesignals FS verweigert werden.

Das Verriegelungsmodul 121 kann die Bremsvermögensmarge BVM alternativ oder zusätzlich auch beispielsweise selbst berechnen unter Einbezug des Bremsvermögens aller betriebsbereiten Bremsen des Schienenfahrzeugs 10 und des Fahrzeuggesamtgewichts. Mit Blick auf ein vorgegebenes Minimalbremsvermögen, das für einen sicheren Betrieb des Schienenfahrzeugs 10 gewährleistet bleiben sollte bzw. muss, kann das Verriegelungsmodul 121 also die Bremsvermögensmarge BVM durch einfache Differenzbildung errechnen. Die beschriebene Arbeitsweise geht von dem Gedanken aus, dass das Schienenfahrzeug 10 mit mehr Bremsvermögen ausgestattet ist, als es für einen vorgegebenen Betrieb benötigt, und im Falle eines Fehlverhaltens einer Bremseinheit, die ein Abschalten der betroffenen Bremseinheit wünschenswert macht, ein Abschalten möglich bleiben soll, solange noch genug Reserve in Form von Bremsvermögen oberhalb einer vorgegebenen Bremsvermögensminimalgrenze verbleibt bzw. die Bremsvermögensmarge noch nicht aufgebracht ist.

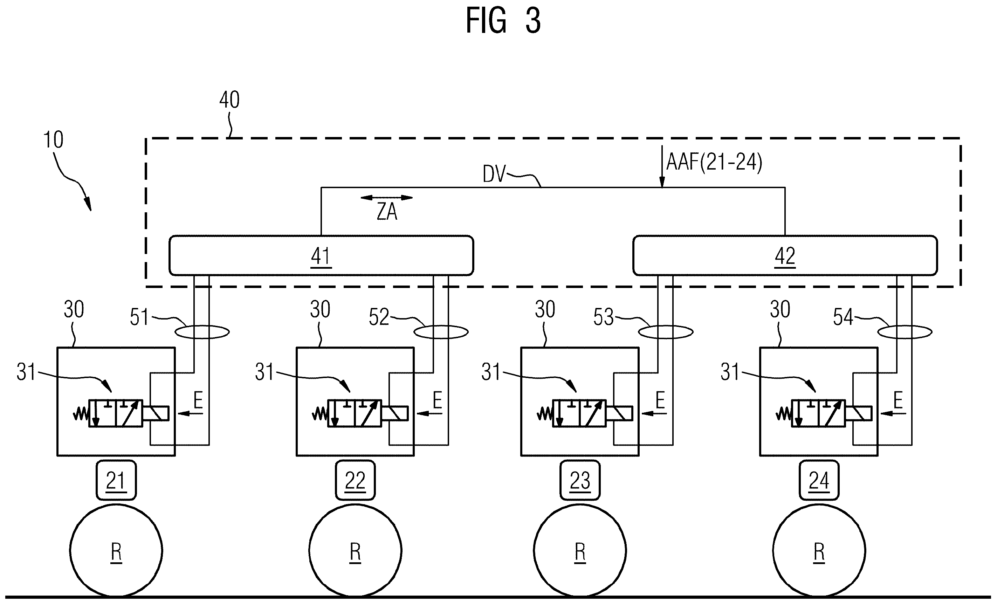

Die Figur 3 zeigt Bestandteile eines zweiten Ausführungsbeispiels für ein erfindungsgemäßes Schienenfahrzeug 10. Das Schienenfahrzeug 10 gemäß Figur 3 kann ebenfalls mehrgliedrig sein und durch einen Fahrzeugverband gebildet sein.

Bei dem Ausführungsbeispiel gemäß Figur 3 umfasst die Zentraleinrichtung 40 zwei oder mehr Hilfseinrichtungen 41-42, die im Fahrzeug verteilt sind und miteinander kommunizieren. Jeder Hilfseinrichtung 41-42 sind individuell ein oder mehr der Bremseinheiten 21-22 bzw. 23-24 zugeordnet, wobei das Bereitstellen der Abschaltenergie E im Falle eines Abschaltens von Bremseinheiten 21-24 von der jeweils zugeordneten Hilfseinrichtung 41-42 individuell gesteuert wird.

Die Hilfseinrichtungen 41-42 kommunizieren untereinander über eine Datenverbindung DV, bei der es sich beispielsweise um einen zuginternen Datenbus handeln kann, und tauschen Zustandsangaben ZA aus, die den Betriebszustand der ihnen jeweils zugeordneten Bremseinheiten 21-24 beschreiben. Jede Hilfseinrichtung 41-42 hat somit die Möglichkeit, auf eine Abschaltanfrage AAF, die eine ihm zugeordnete Bremseinheit betrifft, jeweils eine Prüfung auf die Zulässigkeit eines Abschaltens mit Blick auf die für das Schienenfahrzeug 10 anwendbare Bremsvermögensmarge BVM vorzunehmen, wie dies oben im Zusammenhang mit den Figuren 1 und 2 erläutert wurde.

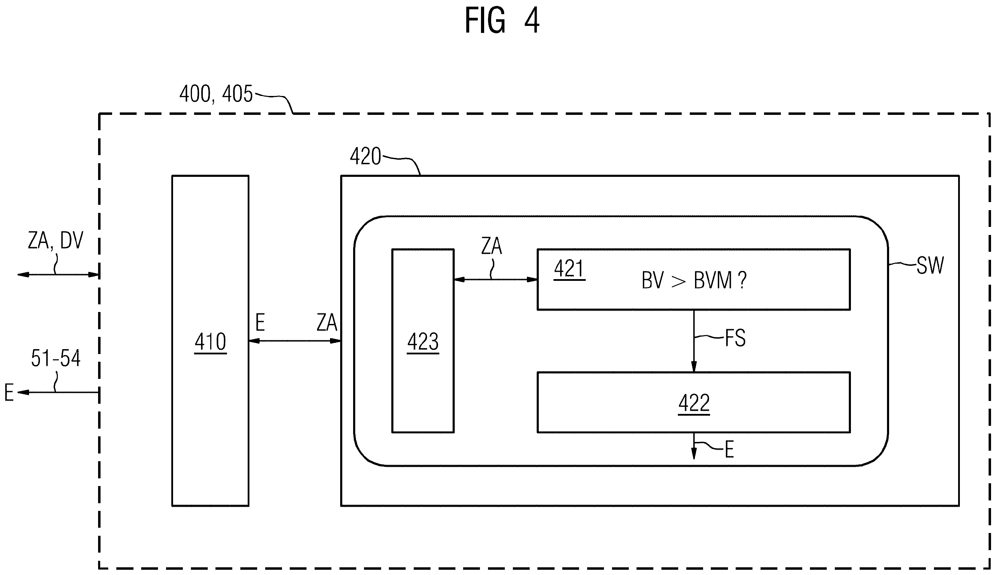

Die Figur 4 zeigt ein Ausführungsbeispiel für eine Hilfseinrichtung 400, die als jede der Hilfseinrichtungen 41-42 gemäß Figur 3 eingesetzt werden kann.

Die Hilfseinrichtung 400 umfasst eine Rechenanlage 405, die eine Recheneinrichtung 410 und einen Speicher 420 aufweist. In dem Speicher 420 ist Software SW abgespeichert, die ein Verriegelungssubmodul 421, ein Abschaltsteuersubmodul 422 und ein Kommunikationssubmodul 423 umfasst.

Das Kommunikationssubmodul 423 enthält Programmbefehle, die bei Ausführung durch die Recheneinrichtung 410 diese veranlassen, den Zustand der ihrer Hilfseinrichtung 400 zugeordneten Bremseinheiten 21-24 an die anderen Hilfseinrichtungen 41-42, insbesondere deren Kommunikationssubmodule 423, in Form von Zustandsangaben ZA über die Datenverbindung DV zu übermitteln sowie entsprechende Zustandsangaben ZA, die den Zustand der den anderen Hilfseinrichtungen 41-42 zugeordneten Bremseinheiten 21-24 betreffen, zu empfangen. Das Kommunikationssubmodul 423 kennt somit die Betriebsbereitschaft aller Bremseinheiten 21-24 des Schienenfahrzeugs 10 und damit das gesamte aktuelle Gesamtbremsvermögen des Schienenfahrzeugs 10.

Das Verriegelungssubmodul 421 enthält Programmbefehle, die bei Ausführung durch die Recheneinrichtung 410 diese veranlassen, in Reaktion auf jede Abschaltanfrage AAF, die ein Abschalten einer der der Hilfseinrichtung 400 zugeordneten Bremseinheiten 21-24 betrifft, zu prüfen, ob ein solches Abschalten zulässig ist. Im Falle einer Zulässigkeit gibt das Verriegelungssubmodul 421 ein Abschalten der betroffenen Bremseinheit frei, indem es dem Abschaltsteuersubmodul 422 ein entsprechendes Freigabesignal FS übermittelt.

Um dem Verriegelungssubmodul 421 eine Prüfung der Abschaltanfragen AAF zu ermöglichen, ist diesem vorzugsweise die Bremsvermögensmarge BVM vorgegeben, die das maximal abschaltbare Bremsvermögen des gesamten Schienenfahrzeugs 10 definiert. Das Verriegelungssubmodul 421 erzeugt das Freigabesignal FS in Abhängigkeit von dieser Bremsvermögensmarge BVM und stellt sicher, dass das insgesamt - also unter Einbezug der anderen Hilfseinrichtungen 41-42 - abgeschaltete oder ausgefallene Bremsvermögen BV die Bremsvermögensmarge BVM zu keinem Zeitpunkt überschreitet, wie dies oben im Zusammenhang mit dem Verriegelungsmodul 121 der Zentraleinrichtung 40 gemäß Figur 2 erläutert wurde.

Das Verriegelungssubmodul 421 kann die Bremsvermögensmarge BVM alternativ oder zusätzlich auch selbst berechnen unter Einbezug des Bremsvermögens aller betriebsbereiten Bremsen des Schienenfahrzeugs 10 und des Fahrzeuggesamtgewichts, indem es die intern vorliegenden Informationen über die ihm zugeordneten Bremseinheiten 21-24 und die von den anderen Hilfseinrichtungen 41-42 übermittelten Zustandsangaben ZA, die den Zustand der den anderen Hilfseinrichtungen 41-42 zugeordneten Bremseinheiten 21-24 betreffen, auswertet. Mit Blick auf ein vorgegebenes Minimalbremsvermögen, das für einen sicheren Betrieb des gesamten Schienenfahrzeugs 10 gewährleistet bleiben sollte bzw. muss, kann das Verriegelungssubmodul 421 also die Bremsvermögensmarge BVM durch einfache Differenzbildung errechnen.

Das Abschaltsteuersubmodul 422 enthält Programmbefehle, die bei Ausführung durch die Recheneinrichtung 210 diese veranlassen, bei Erhalt eines Freigabesignals FS die von der Abschaltanfrage AAF betroffene Abschalteinheit 30 abschalteinheitsindividuell mit Abschaltenergie E zu versorgen bzw. versorgen zu lassen, so dass die Abschalteinheit 30 in den Aktivzustand versetzt wird. Bezüglich der nicht von der Abschaltanfrage AAF betroffenen Abschalteinheiten 30 ändert sich dadurch nichts, sie bleiben hinsichtlich ihrer Versorgung mit Abschaltenergie E unverändert.

Bei dem Ausführungsbeispiel gemäß Figur 4 wird eine Verriegelung dergestalt, dass ein Abschalten von Bremseinheiten 21-24 nur in einem vorgegebenen Maße möglich ist, also softwareseitig durch eine auf zwei oder mehr Rechenanlagen verteilte Software SW in Form von verteilten Verriegelungssubmodulen 421 gewährleistet.

Die Figuren 1 und 3 zeigen außerdem ein erstes Ausführungsbeispiel für eine Abschalteinheit 30, die bei den Schienenfahrzeugen 10 gemäß Figur 1 und 3 eingesetzt werden kann, näher im Detail. Bei der Abschalteinheit 30 gemäß den Figuren 1 und 3 handelt es sich um ein 3/2-Wegeventil 31, bei dem das Aufrechterhalten des Aktivzustands bzw. das Abschalten der zugeordneten Bremseinheit das Vorhandensein einer Strom- und/oder Spannungsversorgung erfordert. Ohne Strom- und/oder Spannungsversorgung bzw. im Passivzustand wird die zugeordnete Bremseinheit mit Druck eines Fluids versorgt. Bei Strom- und/oder Spannungsversorgung erfolgt eine Ventilumstellung und eine Belüftung der Bremseinheit durch Ablassen von Fluid mit Bezug auf den der Bremseinheit zugeordneten Ventilausgang.

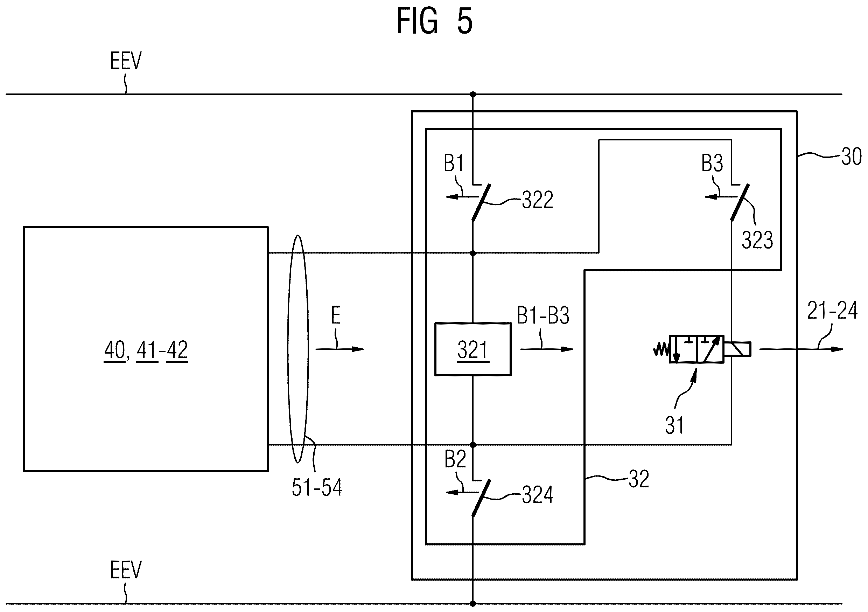

Die Figur 5 zeigt ein zweites Ausführungsbeispiel für eine Abschalteinheit 30, die bei den Schienenfahrzeugen 10 gemäß Figur 1 und 3 eingesetzt werden kann. Die Abschalteinheit 30 gemäß Figur 6 umfasst zusätzlich zu dem bereits beschriebenen 3/2-Wegeventil 31 eine Selbsterhaltungsschaltung 32. Die Selbsterhaltungsschaltung 32 hält nach einer initialen Versorgung ihrer zugeordneten Abschalteinheit 30 mit Abschaltenergie E den Aktivzustand durch das Anlegen der Strom- und/oder Spannungsversorgung auch ohne Mitwirkung der Zentraleinrichtung 40 aufrecht. Zu diesem Zwecke kann die Selbsterhaltungsschaltung 32, wie beispielhaft in der Figur 6 gezeigt, ein Relais mit einem Relaisantrieb 321 in Form eines Elektromagneten und drei Schließerkontakten 322-324 umfassen oder durch ein solches gebildet sein, die von dem Elektromagneten 321 bei Strom- bzw. Spannungsbeaufschlagung mittels Stellsignalen B1-B3 geschlossen werden und bei fehlender Strom- bzw. Spannungsbeaufschlagung beispielsweise durch eine Federkraft in den geöffneten Zustand gestellt werden.

Sobald der Elektromagnet 321 durch die Zentraleinrichtung 40 über die abschalteinheitsindividuelle Energieversorgungsleitung 51-54 mit Umschalt- bzw. Abschaltenergie E versorgt und dadurch aktiviert wird, werden die Schließerkontakte 322-324 geschlossen und die nachfolgende Strom- bzw. Spannungsbeaufschlagung wird von einer externen Strom- bzw. Spannungsversorgung EEV gewährleistet, auch wenn über die abschalteinheitsindividuelle Energieversorgungsleitung 51-54 kein Strom bzw. keine Spannung mehr zur Verfügung gestellt werden. Die externe Strom- bzw. Spannungsversorgung EEV ist vorzugsweise von der Zentraleinrichtung 40 deaktivierbar, um alle Abschalteinheiten 30 in ihren Grundzustand zurücksetzen zu können. Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder mehreren anderen Unteransprüchen, um weitere andere Ausführungsbeispiele zu erhalten.

## Patentansprüche

1. Schienenfahrzeug (10)
- mit zumindest zwei Bremseinheiten (21-24) und
- mit jeweils einer zugeordneten Abschalteinheit (30) für jede der zumindest zwei Bremseinheiten (21-24),
**dadurch gekennzeichnet, dass**
- jede Abschalteinheit (30) in einem Passivzustand einen Bremsbetrieb der jeweils zugeordneten Bremseinheit (21-24) erlaubt und in einem Aktivzustand einen Bremsbetrieb der jeweils zugeordneten Bremseinheit (21-24) unterbindet,
- das Umschalten der Abschalteinheit (30) vom Passivzustand in den Aktivzustand Abschaltenergie (E) erfordert und
- eine Zentraleinrichtung (40) des Schienenfahrzeugs (10) mit jeder der Abschalteinheiten (30) über eine abschalteinheitsindividuelle Energieversorgungsleitung (51-54) zur Übertragung der Abschaltenergie (E) verbunden ist.

2. Schienenfahrzeug (10) nach Anspruch 1,
**dadurch gekennzeichnet, dass**
die Zentraleinrichtung (40) zwei oder mehr der Abschalteinheiten (30) über deren abschalteinheitsindividuellen Energieversorgungsleitungen (51-54) gleichzeitig mit Abschaltenergie (E) versorgen kann.

3. Schienenfahrzeug (10) nach einem der voranstehenden Ansprüche,
**dadurch gekennzeichnet, dass**
die Zentraleinrichtung (40) zwei oder mehr der Abschalteinheiten (30), insbesondere alle Abschalteinheiten (30), über deren abschalteinheitsindividuellen Energieversorgungsleitungen (51-54) in beliebiger Kombination gleichzeitig mit Abschaltenergie (E) versorgen kann.

4. Schienenfahrzeug (10) nach einem der voranstehenden Ansprüche,
**dadurch gekennzeichnet, dass**
alle Abschalteinheiten (30) über deren abschalteinheitsindividuelle Energieversorgungsleitungen (51-54) gleichzeitig mit Abschaltenergie (E) versorgbar sind.

5. Schienenfahrzeug (10) nach einem der voranstehenden Ansprüche,
**dadurch gekennzeichnet, dass**
die Zentraleinrichtung (40) dazu ausgestaltet ist,
- auf eine mindestens eine der Bremseinheiten (21-24) betreffende Abschaltanfrage (AAF) hin zu prüfen, ob ein Abschalten zulässig ist, und
- im Falle einer Zulässigkeit die von der Abschaltanfrage (AAF) betroffenen Abschalteinheiten (30) abschalteinheitsindividuell mit Abschaltenergie (E) zu versorgen und in den Aktivzustand zu versetzen und die nicht von der Abschaltanfrage (AAF) betroffenen Abschalteinheiten (30) hinsichtlich ihrer Versorgung mit Abschaltenergie (E) unverändert zu lassen.

6. Schienenfahrzeug (10) nach einem der voranstehenden Ansprüche,
**dadurch gekennzeichnet, dass**
- der Zentraleinrichtung (40) eine Bremsvermögensmarge (BVM) vorgegeben ist, die ein maximal abschaltbares Bremsvermögen definiert, und
- die Zentraleinrichtung (40) das Abschalten derart steuert, dass das abgeschaltete Bremsvermögen (BV) die Bremsvermögensmarge (BVM) zu keinem Zeitpunkt überschreitet.

7. Schienenfahrzeug (10) nach einem der voranstehenden Ansprüche,
**dadurch gekennzeichnet, dass**
die Bremsvermögensmarge (BVM) vor Fahrtbeginn eingestellt wird.

8. Schienenfahrzeug (10) nach einem der voranstehenden Ansprüche,
**dadurch gekennzeichnet, dass**
die Zentraleinrichtung (40) die Bremsvermögensmarge (BVM) berechnet unter Einbezug des Bremsvermögens (BV) aller betriebsbereiten Bremsen des Schienenfahrzeugs (10) und des Fahrzeuggesamtgewichts.

9. Schienenfahrzeug (10) nach einem der voranstehenden Ansprüche,
**dadurch gekennzeichnet, dass**
- die Zentraleinrichtung (40) zwei oder mehr Hilfseinrichtungen (41, 42) umfasst, die im Schienenfahrzeug (10) verteilt sind und miteinander kommunizieren,
- wobei jeder Hilfseinrichtung (41, 42) jeweils individuell ein oder mehr der Bremseinheiten (21-24) zugeordnet sind und
- wobei das Bereitstellen der Abschaltenergie (E) im Falle eines Abschaltens von Bremseinheiten (21-24) von der jeweils zugeordneten Hilfseinrichtung (41, 42) individuell gesteuert wird.

10. Schienenfahrzeug (10) nach einem der voranstehenden Ansprüche,
**dadurch gekennzeichnet, dass**
das Schienenfahrzeug (10) mehrgliedrig ist und durch einen Fahrzeugverband gebildet ist.

11. Schienenfahrzeug (10) nach einem der voranstehenden Ansprüche,
**dadurch gekennzeichnet, dass**
das Aufrechterhalten des Aktivzustands von Abschalteinheiten (30) das Anliegen einer Strom- und/oder Spannungsversorgung erfordert.

12. Schienenfahrzeug (10) nach Anspruch 11,
**dadurch gekennzeichnet, dass**
zumindest eine der Abschalteinheiten (30) eine Selbsterhaltungsschaltung (32) umfasst, die nach einer initialen Versorgung ihrer zugeordneten Abschalteinheit (30) mit Abschaltenergie (E) den Aktivzustand durch das Anlegen der Strom- und/oder Spannungsversorgung auch ohne Mitwirkung der Zentraleinrichtung (40) aufrechterhält.

13. Schienenfahrzeug (10) nach einem der voranstehenden Ansprüche,
**dadurch gekennzeichnet, dass**
mindestens eine der Bremseinheiten (21-24) zwei oder mehr Bremsaktuatoren umfasst und alle Bremsaktuatoren einer jeden Bremseinheit jeweils von der der Bremseinheit zugeordneten Abschalteinheit (30) gemeinsam abgeschaltet werden.

14. Verfahren zum Betreiben eines Schienenfahrzeugs (10), das ausgestattet ist mit zumindest zwei Bremseinheiten (21-24) und mit jeweils einer zugeordneten Abschalteinheit (30) für jede der zumindest zwei Bremseinheiten (21-24),
**dadurch gekennzeichnet, dass**
- jede Abschalteinheit (30) jeweils in einem Passivzustand einen Bremsbetrieb der jeweils zugeordneten Bremseinheit (21-24) erlaubt und in einem Aktivzustand einen Bremsbetrieb der jeweils zugeordneten Bremseinheit (21-24) unterbindet,
- das Umschalten der Abschalteinheit (30) vom Passivzustand in den Aktivzustand Abschaltenergie (E) erfordert und
- eine fahrzeugseitige Zentraleinrichtung (40) Bremseinheiten (21-24) deaktiviert, indem sie die jeweils zugeordneten Abschalteinheiten (30) über abschalteinheitsindividuelle Energieversorgungsleitungen (51-54) mit der Abschaltenergie (E) versorgt.

15. Verfahren nach Anspruch 14,
**dadurch gekennzeichnet, dass**
die Zentraleinrichtung (40) ein maximal abschaltbares Bremsvermögen berücksichtigt und das Aktivieren der Abschalteinheiten (30) so begrenzt, dass die Bremsvermögensmarge (BVM) nicht überschritten wird.
